(19) Europäisches Patentamt
European Patent Office
Office européen des brevets

(11) **EP 4 560 213 A1**

(12) **EUROPEAN PATENT APPLICATION**
published in accordance with Art. 153(4) EPC

(43) Date of publication:
**28.05.2025 Bulletin 2025/22**

(21) Application number: **23842997.1**

(22) Date of filing: **19.07.2023**

(51) International Patent Classification (IPC):
**F24F 11/38** (2018.01)    **F24F 11/54** (2018.01)
**F24F 11/58** (2018.01)

(52) Cooperative Patent Classification (CPC):
**F24F 11/38; F24F 11/54; F24F 11/58; F24F 11/61;**
F24F 2110/64

(86) International application number:
**PCT/JP2023/026363**

(87) International publication number:
**WO 2024/019074 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.07.2022  CN 202210851417**

(71) Applicant: **DAIKIN INDUSTRIES, LTD.**
**Osaka-shi, Osaka 530-0001 (JP)**

(72) Inventors:
• **PAN, Si**
  **Osaka-shi, Osaka 530-0001 (JP)**
• **YABU, Tomohiro**
  **Osaka-shi, Osaka 530-0001 (JP)**

(74) Representative: **Conti, Marco**
  **Bugnion S.p.A.**
  **Via di Corticella, 87**
  **40128 Bologna (IT)**

(54) **ENVIRONMENTAL EQUIPMENT INSPECTION METHOD, DEVICE, AND SYSTEM**

(57)    The present invention provides a method, a device, and a system for inspecting an environmental device. Since a mobile inspection device is used to collect data of an environmental device, information of changes in a site of the device is generated based on the data, and a health state parameter of the environmental device is identified based on the information of changes in the site of the device, operation data of the device, and an initial operation time, a user is able to timely know a health state of the environmental device, and thereby able to determine in advance a decision for maintenance, servicing, and replacement, for example, making it possible to fully utilize value of the environmental device to improve use experience of the user, and, furthermore, since, when a health state parameter of the environmental device is to be identified, information of changes, which has been generated from data collected in the site, and information such as operation data and an operation time of the device are combined with each other, various factors affecting the health state of the device are comprehensively taken into consideration, and accuracy of a result of estimation is improved, thereby making it possible to provide accurate health information of the device to the user.

```
┌─────────────────────────────────────────┐
│ DETECT DUST AND RUST OUTSIDE ENVIRONMENTAL │ ⌐ 701
│ DEVICE BASED ON DATA OF IMAGE OF ENVIRONMENTAL │
│ DEVICE AND ITS SURROUNDINGS, WHICH HAS BEEN │
│ COLLECTED BY MOBILE INSPECTION DEVICE │
└─────────────────────────────────────────┘
                    │
                    ▼
┌─────────────────────────────────────────┐
│ GENERATE DIRT COEFFICIENT AND RUST COEFFICIENT │ ⌐ 702
│ INDICATING DEGREE OF CLEANLINESS OF ENVIRONMENTAL │
│ DEVICE BASED ON RESULT OF DETECTION OF DUST AND │
│ RUST OUTSIDE ENVIRONMENTAL DEVICE │
└─────────────────────────────────────────┘
```

**FIG. 7**

**Description**

**TECHNICAL FIELD**

The present invention relates to a field of inspection for a device, and to a method, a device, and a system for inspecting an environmental device.

**BACKGROUND ART**

With rapidly developing social economy and rapidly advancing urbanization and industrialization, environmental devices such as air conditioners have been widely applied.

With extending durable years, an environmental device gradually deteriorates due to aging. Currently and generally, only when there is an abnormality in an environmental device or there is a deteriorated use situation, a user requests an inspection, and a servicing person visits his or her house to inspect the device.

In addition, the servicing person may periodically visit the house to perform an inspection service, and, during an inspection, the servicing person collects operation data of the environmental device, inspects an operation situation of the environmental device, and estimates a degree of deterioration due to aging based on the operation data of the environmental device, for example, to lower a probability of occurrence of an initial abnormality in the environmental device to some extent.

It should be noted that the above description with respect to the technical background is merely provided to clearly and completely describe technical solutions according to the present invention and to ease understanding by those skilled in the art. Even only when these solutions are described in the background art part pertaining to the present invention, it is not considered that the technical solutions described above are known to those skilled in the art.

**SUMMARY OF THE INVENTION**

However, although, in the conventional method described above, there is a possibility that irreversible damage has occurred in an environmental device when a user has reported that there is an abnormality in the environmental device or there is a deteriorated use situation, the servicing person generally determines an operation state and a degree of deterioration due to aging, for example, of the environmental device from the operation data, in the conventional inspection method, and, since the method depends on experience of the servicing person and takes only the operation data into consideration when a degree of deterioration due to aging of the environmental device is to be estimated, a result of estimation may not be accurate.

In fact, for an environmental device, or for an environmental device installed outdoors, environmental factors in a site where the environmental device is positioned also greatly affect deterioration due to aging of the device, and factors such as washing due to rainwater, a state of a drain outlet on a roof, whether the drain outlet is blocked or not, effects of a layout of a peripheral device on ventilation of the environmental device, rust, dirt, or installation positions of solar panels and devices of other manufacturers covering the environmental device also greatly affect deterioration due to aging of the environmental device. However, in the conventional method, no dynamic factors in a site where these devices are positioned are taken into consideration.

In addition, in the conventional method described above, the user is impossible to timely know information such as a degree of deterioration due to aging of the environmental device, making it impossible to take measures in advance. That is, there is no request for servicing, maintenance, or replacement for the device until it is impossible to normally use the device, which lowers value of the device and leads to wasting, negatively affecting experience of the user.

To solve at least one of those issues described above, an example of the present invention provides a method, a device, and a system for inspecting an environmental device. It is thus possible to provide an accurate result of estimation of a health state of the environmental device, allowing the user to timely know the health state of the environmental device.

According to a first aspect of an example of the present invention, there is provided a method for inspecting an environmental device, including: using a mobile inspection device to collect data of a site where the environmental device is positioned; generating information of changes in the site where the environmental device is positioned based on the data collected by the mobile inspection device; acquiring operation data of the environmental device and information of an initial operation time of the environmental device; and identifying a health state parameter of the environmental device based on the information of changes in the site where the environmental device is positioned, the operation data of the environmental device, and the information of the initial operation time of the environmental device.

According to a second aspect of the example of the present invention, there is provided an inspection system for an environmental device, including: the environmental device serving as an inspection target; a mobile inspection device; and a server on a cloud side, in which the mobile inspection device is allowed to move to a position near the environmental device and/or to stop at the environmental device, to collect data of a site where the environmental device is positioned, and to transmit the data to the server, and the server receives the data transmitted by the mobile inspection device to generate information of changes in the site where the environmental device is positioned based on the data, and the server acquires operation data of the environmental device and information of an initial operation time of the environmental device from the environmental device or the cloud side to further identify a health state parameter of the environmental device based on the information of changes in the site where the environmental device is positioned, the operation data of the environmental device, and the information of the initial operation time of the environmental device.

According to a third aspect of the example of the present invention, there is provided a mobile inspection device including: a drive module that supplies a driving force for allowing the mobile inspection device to move; a wireless communication module that performs wireless communication with at least one of a control device for the mobile inspection device, an environmental device, and a server on a cloud side; a detection module including at least one of an imaging module, an infrared imaging module, a vibration sensor, a directional sound sensor, a radar, and an air quantity sensor; and a global positioning system (GPS) module that identifies a position of the mobile inspection device.

One of beneficial effects of the example of the present invention is that, since a mobile inspection device is used to collect data of an environmental device, information of changes in a site of the device is generated based on the data, and a health state parameter of the environmental device is identified based on the information of changes in the site of the device, operation data of the device, and an initial operation time, a user is able to timely know a health state of the environmental device, and thereby able to determine in advance a decision for maintenance, servicing, and replacement, for example, making it possible to fully utilize value of the environmental device to improve use experience of the user.

Furthermore, since, when a health state parameter of the environmental device is to be identified, information of changes, which has been generated from data collected in the site, and information such as operation data and an operation time of the device are combined with each other, various factors affecting the health state of the device are comprehensively taken into consideration, and accuracy of a result of estimation is improved, thereby making it possible to provide accurate health information of the device to the user.

It is possible that, in a same or similar aspect, characteristic information described and indicated in one embodiment is used in one or more other embodiments, combined with characteristic information in other embodiments, or substituted for characteristic information in other embodiments.

It should be emphasized that the term "include(s) or comprise(s)/including or comprising" when used in this specification is taken to specify that characteristic information, a whole member, a step, or a member is present, but does not preclude that one or more other pieces of characteristic information, whole members, steps, or members is or are present/added.

## BRIEF DESCRIPTION OF THE DRAWINGS

It is possible to better understand many aspects of the present invention with reference to accompanying drawings described below. Members illustrated in the drawings are not illustrated in a proportional manner, but are only illustrated for indicating principles of the present invention. To facilitate illustrating and describing some parts of the present invention, corresponding parts may be increased or reduced in size in the drawings. It is possible to combine elements and characteristic information described in one drawing or one embodiment of the present invention with factors and characteristic information illustrated in one or more other drawings or embodiments. Furthermore, in the drawings, like reference numerals designate corresponding members throughout several drawings, and may be used to designate corresponding members in one or more embodiments. The drawings are as described below.

Fig. 1 is a schematic view illustrating a method for inspecting an environmental device, according to Example 1 of the present invention.
Fig. 2 is a schematic view illustrating a scene of the method for inspecting the environmental device, according to Example 1 of the present invention.
Fig. 3 is a schematic view illustrating a method for collecting data of a site by a mobile inspection device, according to Example 1 of the present invention.
Fig. 4 is a schematic view illustrating a method for achieving step 301, according to Example 1 of the present application.
Fig. 5 is a schematic view illustrating another method for achieving step 301, according to Example 1 of the present application.
Fig. 6 is a schematic view illustrating a method for generating a ventilation condition, according to Example 1 of the present application.
Fig. 7 is a schematic view illustrating a method for generating a degree of cleanliness, according to Example 1 of the present application.
Fig. 8 is a schematic view illustrating a method for generating information of shielding, according to Example 1 of the present application.

Fig. 9 is a schematic view illustrating a method for generating a drain state, according to Example 1 of the present application.

Fig. 10 is a schematic view illustrating a method for generating a quantity of exhaust air, according to Example 1 of the present invention.

Fig. 11 is a schematic view illustrating a method for generating an installation state, according to Example 1 of the present invention.

Fig. 12 is a schematic view illustrating a method for generating an ignition risk, according to Embodiment 1 of the present application.

Fig. 13 is a schematic view illustrating a method for generating a refrigerant leakage risk, according to Example 1 of the present application.

Fig. 14 is a schematic view illustrating a method for achieving step 103, according to Example 1 the present application.

Fig. 15 is a schematic view illustrating how to use a ninth model, according to Example 1 of the present application.

Fig. 16 is a schematic view illustrating a network structure of the ninth model, according to Example 1 of the present application.

Fig. 17 is a schematic view illustrating a relationship between exchange value of a device and a degree of deterioration due to aging, according to Example 1 of the present application.

Fig. 18 is a schematic view illustrating an inspection system for an environmental device, according to Example 2 of the present invention.

Fig. 19 is a schematic view illustrating a mobile inspection device according to Example 3 of the present invention.

## DESCRIPTION OF EMBODIMENTS

Preferred embodiments of the present invention will now be described herein with reference to the accompanying drawings.

<Example 1>

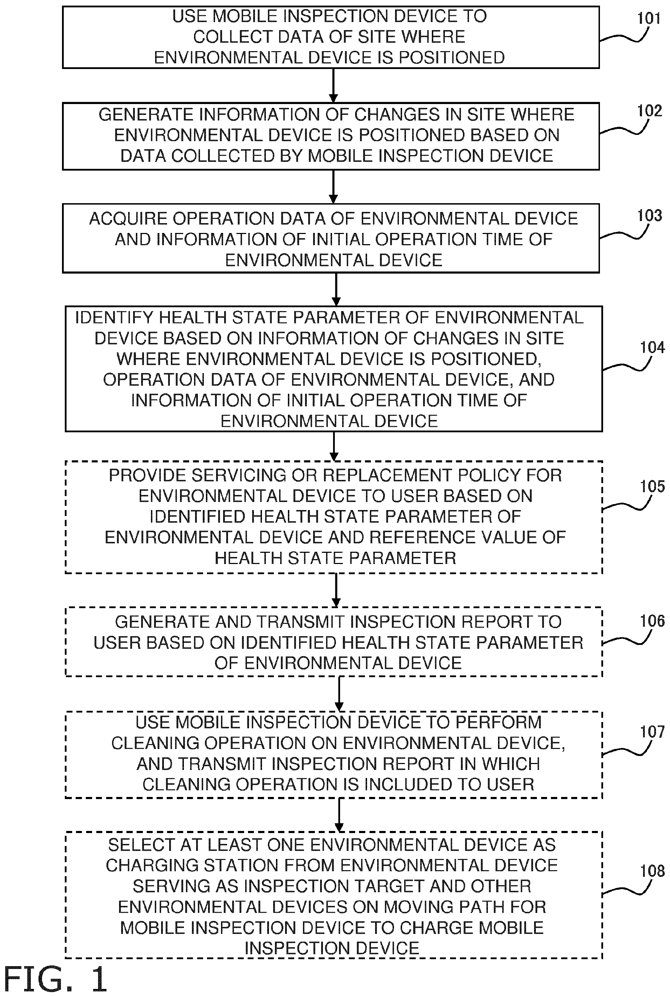

Example 1 of the present invention provides a method for inspecting an environmental device. Fig. 1 is a schematic view illustrating a method for inspecting an environmental device, according to Example 1 of the present invention. As illustrated in Fig. 1, the method includes:

step 101 for using a mobile inspection device to collect data of a site where the environmental device is positioned;
step 102 for generating information of changes in the site where the environmental device is positioned based on the data collected by the mobile inspection device;
step 103 for acquiring operation data of the environmental device and information of an initial operation time of the environmental device; and
step 104 for identifying a health state parameter of the environmental device based on the information of changes in the site where the environmental device is positioned, the operation data of the environmental device, and the information of the initial operation time of the environmental device.

In this way, since a mobile inspection device is used to collect data of an environmental device, information of changes in a site of the device is generated based on the data, and a health state parameter of the environmental device is identified based on the information of changes in the site of the device, operation data of the device, and an initial operation time, a user is able to timely know a health state of the environmental device, and thereby able to determine in advance a decision for maintenance, servicing, and replacement, for example, making it possible to fully utilize value of the environmental device to improve use experience of the user.

Furthermore, since, when a health state parameter of the environmental device is to be identified, information of changes, which has been generated from data collected in the site, and information such as operation data and an operation time of the device are combined with each other, various factors affecting the health state of the device are comprehensively taken into consideration, and accuracy of a result of estimation is improved, thereby making it possible to provide accurate health information of the device to the user.

In some examples, the environmental device includes various environmental devices installed outdoors, and, for example, the environmental device includes at least one type of an outdoor unit of an air conditioner, an outdoor unit of a fresh air system, and a solar energy device, and, in the example of the present application, an outdoor unit of an air conditioner, which is installed outdoors, is described as an example.

In some examples, an environmental device to be installed outdoors may be installed on a rooftop of a building, or may be installed on a bracket for a device, which is present outside the building, such as a bracket for an air conditioner, or may be installed at another certain position.

However, the method according to the example of the present application is also applied to an environmental device installed in a room, such as an indoor unit of an air conditioner, an indoor device of a fresh air system, a humidifier, or an air cleaning device.

In some examples, an environmental device that should be detected is also referred to as a target environmental device.

In some examples, inspection refers to an act of periodically inspecting a device and/or inspecting some items that have been set for the device. Alternatively, in some examples, inspection may be understood as normal inspection or detection.

At step 101, the mobile inspection device is used to collect data of the site where the environmental device is positioned.

In some examples, the mobile inspection device may be an inspection device that varies in type and that is movable, and, for example, the mobile inspection device may be a drone or an airship, or the mobile inspection device may be another facility device that is freely movable.

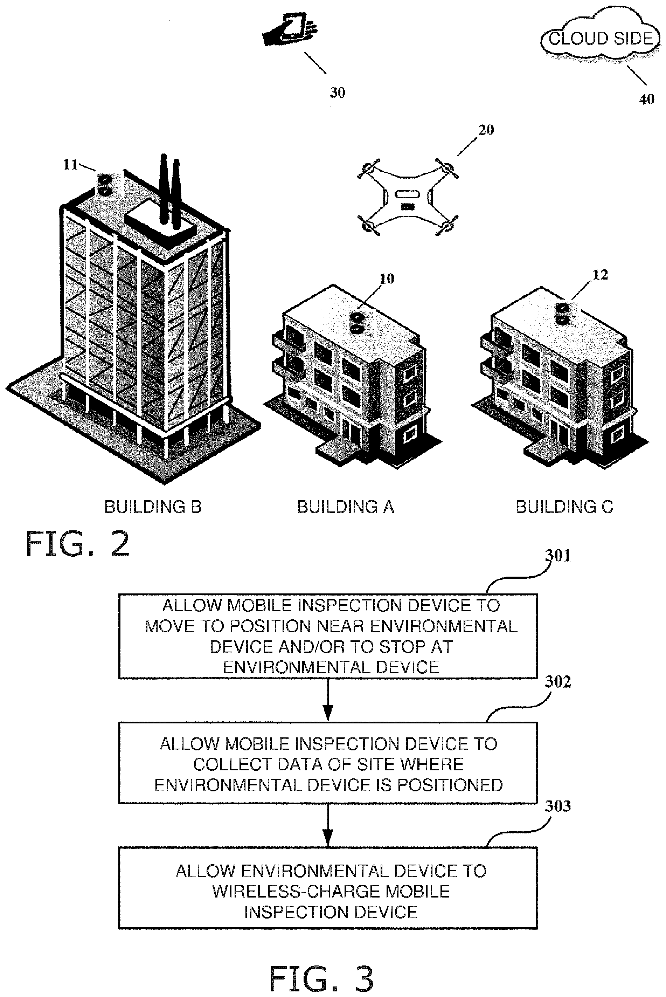

Fig. 2 is a schematic view illustrating a scene of the method for inspecting the environmental device, according to Example 1 of the present application. As illustrated in Fig. 2, for example, an air conditioner outdoor unit 10 serving as an environmental device is provided on a rooftop of a building A, and air conditioner outdoor units 11 and 12 are further provided on rooftops of neighboring buildings B and C, respectively, and a drone 20 serving as a mobile inspection device collects data of a site from at least one of the air conditioner outdoor units 10, 11, and 12.

In addition, as illustrated in Fig. 2, it is possible that the drone 20 is controlled by a control terminal 30, and, for example, remotely controlled by the control terminal 30, and/or allowed to move based on a target position or a target path that is set by the control terminal 30.

In addition, as illustrated in Fig. 2, a server 40 on a cloud side is able to perform wireless communication with the drone 20, and/or the server 40 on the cloud side is able to perform wireless communication with at least one of the air conditioner outdoor units 10, 11, and 12.

In some examples, the mobile inspection device is first allowed to move to a position near a target environmental device serving as an environmental device that should be detected or to stop at the environmental device to collect data of a site.

Fig. 3 is a schematic view illustrating a method for collecting data of the site by the mobile inspection device, according to Example 1 of the present application. As illustrated in Fig. 3, the method includes:

step 301 for allowing the mobile inspection device to move to a position near the environmental device and/or to stop at the environmental device; and
step 302 for allowing the mobile inspection device to collect data of the site where the environmental device is positioned.

In some examples, when it is possible to couple an environmental device to a network, the mobile inspection device is able to acquire information of whether or not the environmental device is operating, via a server on a cloud side, and, when it is impossible to couple an environmental device to the network, the mobile inspection device is able to fly around the environmental device to detect a situation of differences between a temperature of an exhaust air port of the environmental device and temperatures of other parts. When the temperature of the exhaust air port is higher or lower than a certain threshold value for the temperatures of the other parts, the environmental device is operating.

In some examples, the mobile inspection device is allowed to move around the environmental device to collect data at different angles and orientations to ensure integrity of the data and, for example, to ensure integrity of data of an image.

In some examples, as illustrated in Fig. 3, the method further includes
step 303 for allowing the environmental device to wireless-charge the mobile inspection device. For example, the environmental device and the mobile inspection device are each provided with a wireless charging device.

For example, the outdoor unit of the air conditioner is provided with a two dimensional code, and the mobile inspection device is charged by scanning the two dimensional code.

In this way, the environmental device wireless-charges the mobile inspection device, thereby ensuring continuous operation of the mobile inspection device and improving work efficiency.

In some examples, the mobile inspection device identifies a position of the environmental device that should be detected based on information of the position of the environmental device or information of a user address of the user using the environmental device to move to a position near the position.

When the information of the position of the environmental device or the information of the user address, which has been acquired by the mobile inspection device, is relatively accurate, and, for example, when the environmental device has a global positioning system (GPS) position-measuring function, the accurate information of its position is uploaded to the server on the cloud side. In this case, it is possible that the mobile inspection device is allowed to acquire the accurate position of the environmental device, to move directly to a position near the environmental device, and/or to stop at the environmental device to collect data.

For example, as illustrated in Fig. 2, the drone 20 is able to acquire an accurate position of the air conditioner outdoor unit 10 from the server 40 on the cloud side, to move to a position near the air conditioner outdoor unit 10 based on the accurate position, and to stop at the air conditioner outdoor unit 10.

When information of a position of the environmental device or information of a user address, which has been acquired by the mobile inspection device, is less accurate, and, for example, when the environmental device does not have a GPS position-measuring function, it is impossible to acquire accurate information of its position. When it is possible to couple the environmental device to the network, the mobile inspection device acquires information of an address of the user via the server on the cloud side, and, when it is impossible to couple the environmental device to the network, the mobile inspection device acquires information of the address, which has been registered by the user, via a database. In this case, the mobile inspection device is able to perform a search within a certain range based on the information of the position or the information of the user address, and, when a target environmental device is found, it is possible to use the position-measuring function of the mobile inspection device to upload, store, and update the accurate information of the position of the environmental device in the server on the cloud side.

For example, as illustrated in Fig. 2, the air conditioner outdoor unit 11 is not coupled to the network, and the drone 20 is impossible to acquire an accurate position of the air conditioner outdoor unit 11 from the server 40 on the cloud side. In this case, the drone 20 acquires a user address from the database and performs a search near the building A, and, when the drone 20 finds the air conditioner outdoor unit 11, is able to move to a position near the air conditioner outdoor unit 11 and to further stop at the air conditioner outdoor unit 11. Furthermore, the drone 20 may further upload the accurate position of the air conditioner outdoor unit 11 to the server 40 on the cloud side for use in a next inspection.

In addition, when it is impossible to acquire information of a position of an environmental device or information of an address, it is possible to acquire a building information model (BIM) at a position where the environmental device is present, and, after the position of the environmental device is found from the BIM model, it is possible to move to and confirm the position.

In this way, for a situation where environmental devices differ from each other, the mobile inspection device is able to smoothly reach a position where a target environmental device is present to carry out a task, thereby improving reliability and universality of the method.

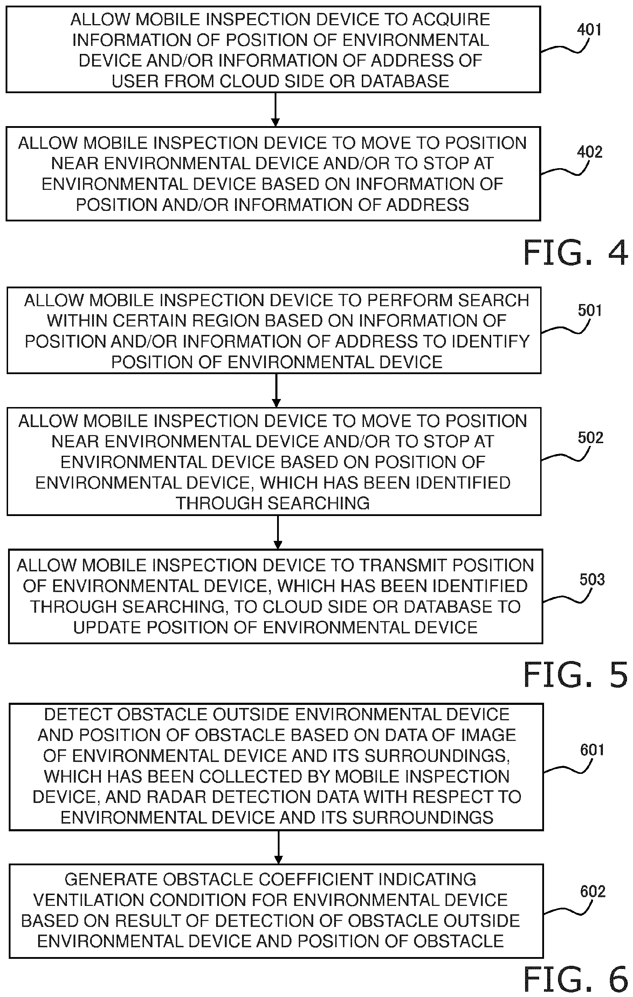

Fig. 4 is a schematic view illustrating a method for achieving step 301, according to Example 1 of the present application. As illustrated in Fig. 4, the method includes:

step 401 for allowing the mobile inspection device to acquire information of a position of the environmental device and/or information of an address of the user from the cloud side or a database; and
step 402 for allowing the mobile inspection device to move to a position near the environmental device and/or to stop at the environmental device based on the information of the position and/or the information of the address.

Fig. 5 is a schematic view illustrating another method for achieving step 301, according to Example 1 of the present application. As illustrated in Fig. 5, the method includes:

step 501 for allowing the mobile inspection device to perform a search within a certain region based on the information of the position and/or the information of the address to identify a position of the environmental device; and
step 502 for allowing the mobile inspection device to move to a position near the environmental device and/or to stop at the environmental device based on the position of the environmental device, which has been identified through the searching.

In some examples, as illustrated in Fig. 5, the method further includes
step 503 for allowing the mobile inspection device to transmit the position of the environmental device, which has been identified through the searching, to the cloud side or the database to update the position of the environmental device.

In this way, the mobile inspection device transmits the accurate position of the searched environmental device to the cloud side or the database, easing later inspections for the environmental device.

In some examples, the data collected by the mobile inspection device includes at least one of data of an image of the environmental device and its surroundings, radar detection data with respect to the environmental device and its surroundings, data of vibration of the environmental device, data of sound of the environmental device, data of an air quantity of the environmental device, and data of an infrared image of the environmental device and its surroundings.

Correspondingly, the mobile inspection device includes a hardware device capable of collecting such data as described above, and, for example, the mobile inspection device includes at least one of an imaging module, an infrared imaging module, a vibration sensor, a directional sound sensor, a radio detecting and ranging (radar), and an air quantity sensor.

At step 102, information of changes in the site where the environmental device is positioned is generated based on the data collected by the mobile inspection device. Accordingly and correspondingly, in some examples, the information of changes includes at least one of a ventilation condition for the environmental device, a degree of cleanliness of the environmental device, information of shielding of the environmental device, a drain state, a quantity of exhaust air of the environmental device, an installation state of the environmental device, an ignition risk of the environmental device, and a refrigerant leakage risk.

In some examples, it is possible to input the data collected by the mobile inspection device into a model to output information of changes in the site where the environmental device is positioned.

In some examples, for pieces of data that are different in type from each other, it is possible to input the pieces of data that are different in type from each other and that have been collected by the mobile inspection device into corresponding models that are different in type from each other, respectively, to output corresponding pieces of information of changes, respectively.

In this way, directly acquiring information of changes through a model having undergone training makes it possible to efficiently perform processing and to acquire an accurate result.

In some examples, the mobile inspection device transmits the collected data to the server on the cloud side, and, thereby, the server generates information of changes in the site where the environmental device is positioned based on the collected data. That is, step 102 may be executed by the server on the cloud side.

In addition, when there may be a deteriorated communication situation between the mobile inspection device and the server on the cloud side, the mobile inspection device may store collected data in the mobile inspection device in advance, and, when the communication situation is improved, the mobile inspection device may transmit the collected data to the server on the cloud side. In this way, application in various network states is achieved, making it possible to ensure smooth progress of inspection stages.

Various collected data and various generated information of changes will now be described herein in detail.

Generation of a ventilation condition for the environmental device in information of changes will now first be described.

Fig. 6 is a schematic view illustrating a method for generating a ventilation condition, according to Example 1 of the present application. As illustrated in Fig. 6, the method includes:

step 601 for detecting an obstacle outside the environmental device and a position of the obstacle based on data of an image of the environmental device and its surroundings, which has been collected by the mobile inspection device, and radar detection data with respect to the environmental device and its surroundings; and

step 602 for generating an obstacle coefficient indicating a ventilation condition for the environmental device based on a result of the detection of the obstacle outside the environmental device and the position of the obstacle.

In some examples, the obstacle includes a branch, a leaf, a foreign object, and another nearby environmental device outside the environmental device.

Since an obstacle outside an environmental device greatly affects a health state of the environmental device, an obstacle coefficient generated based on a result of detection of the obstacle makes it possible to further improve accuracy of estimating a health state parameter of the environmental device.

At step 602, it is possible to input the result of the detection of the obstacle outside the environmental device and the position of the obstacle into a first model having undergone training to output an obstacle coefficient.

In some examples, the first model may be a model based on a neural network, and is acquired through training based on various training methods.

Next, generation of a degree of cleanliness of the environmental device in information of changes will now be described.

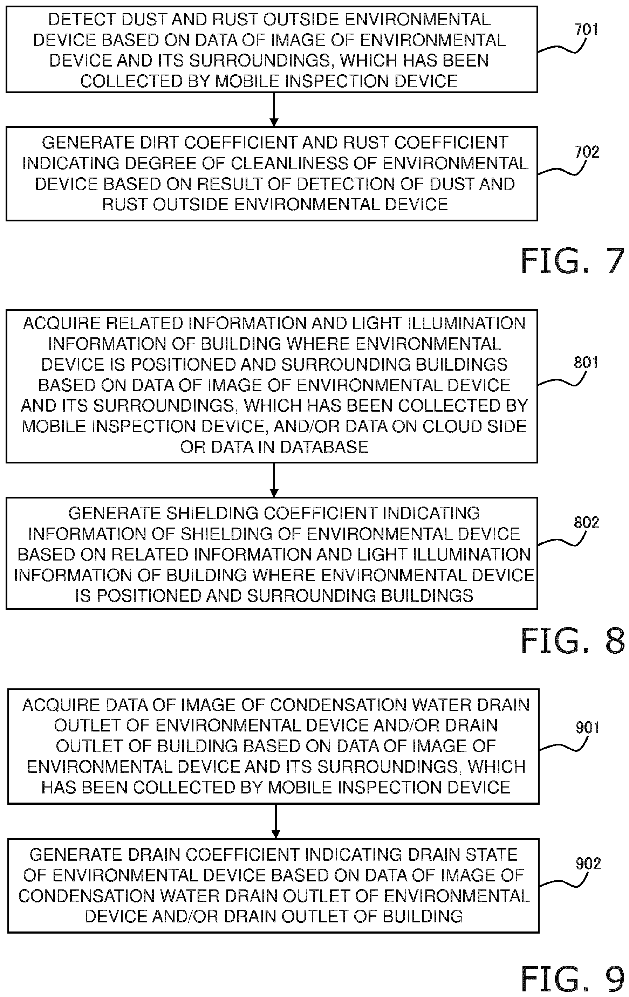

Fig. 7 is a schematic view illustrating a method for generating a degree of cleanliness, according to Example 1 of the present application. As illustrated in Fig. 7, the method includes:

step 701 for detecting dust and rust outside the environmental device based on data of an image of the environmental device and its surroundings, which has been collected by the mobile inspection device; and

step 702 for generating a dirt coefficient and a rust coefficient indicating a degree of cleanliness of the environmental device based on a result of the detection of the dust and rust outside the environmental device.

At step 701, it is possible to detect dust and rust in the data of the image based on an image recognition method.

At step 702, it is possible to input the result of the detection of the dust and rust outside the environmental device into a second model having undergone training to output a dirt coefficient and a rust coefficient.

In some examples, the second model may be a model based on a neural network, and is acquired through training based on various training methods.

Dust and iron rust on a surface of an environmental device are likely to cause the environmental device to be corroded to affect performance such as heat dissipation and waterproofing of the device, greatly affecting a health state of the environmental device. Therefore, a dirt coefficient and a rust coefficient generated based on a result of detection of dust and rust make it possible to further improve accuracy of estimating a health state parameter of the environmental device.

Next, generation of information of shielding of the environmental device in information of changes will now be described.

Fig. 8 is a schematic view illustrating a method for generating information of shielding, according to Example 1 of the present application. As illustrated in Fig. 8, the method includes:

step 801 for acquiring related information and light illumination information of a building where the environmental device is positioned and surrounding buildings based on data of an image of the environmental device and its surroundings, which has been collected by the mobile inspection device, and/or data on the cloud side or data in the database; and

step 802 for generating a shielding coefficient indicating information of shielding of the environmental device based on the related information and the light illumination information of the building where the environmental device is positioned and the surrounding buildings.

For example, as illustrated in Fig. 2, when a target environmental device that should be detected is the air conditioner outdoor unit 10, it is possible to acquire information of the building A and the surrounding buildings B and C, such as a floor height, an area, and a position, and to further acquire light illumination information of the building A, such as a position of the building A, and geographical information of a city where the building A is positioned.

At step 802, it is possible to input the related information and the light illumination information of the building where the environmental device is positioned and the surrounding buildings into a third model having undergone training to output a shielding coefficient.

In some examples, the third model may be a model based on a neural network, and is acquired through training based on various training methods.

In this way, since illumination of light tends to accelerate deterioration of a device due to aging, taking a shielding coefficient into consideration makes it possible to further improve accuracy of estimating a health state parameter of the environmental device.

Next, generation of a drain state of the environmental device in information of changes will now be described.

Fig. 9 is a schematic view illustrating a method for generating a drain state, according to Example 1 of the present application. As illustrated in Fig. 9, the method includes:

step 901 for acquiring data of an image of a condensation water drain outlet of the environmental device and/or a drain outlet of the building based on data of an image of the environmental device and its surroundings, which has been collected by the mobile inspection device; and

step 902 for generating a drain coefficient indicating a drain state of the environmental device based on the data of the image of the condensation water drain outlet of the environmental device and/or the drain outlet of the building.

In some examples, the condensation water drain outlet of the environmental device is, for example, a condensation water drain outlet of an outdoor unit of an air conditioner, and the drain outlet of the building is, for example, a drain outlet on a rooftop on which the environmental device is installed.

At step 902, it is possible to input the data of the image of the condensation water drain outlet of the environmental device and/or the drain outlet of the building into a fourth model having undergone training to output a drain coefficient.

In some examples, the fourth model may be a model based on a neural network, and is acquired through training based on various training methods.

In this way, since there is a possibility that accumulated water causes corrosion on the device and deterioration of performance due to aging, taking a drain coefficient into consideration makes it possible to further improve accuracy of estimating a health state parameter of the environmental device.

Next, generation of a quantity of exhaust air of the environmental device in information of changes will now be described.

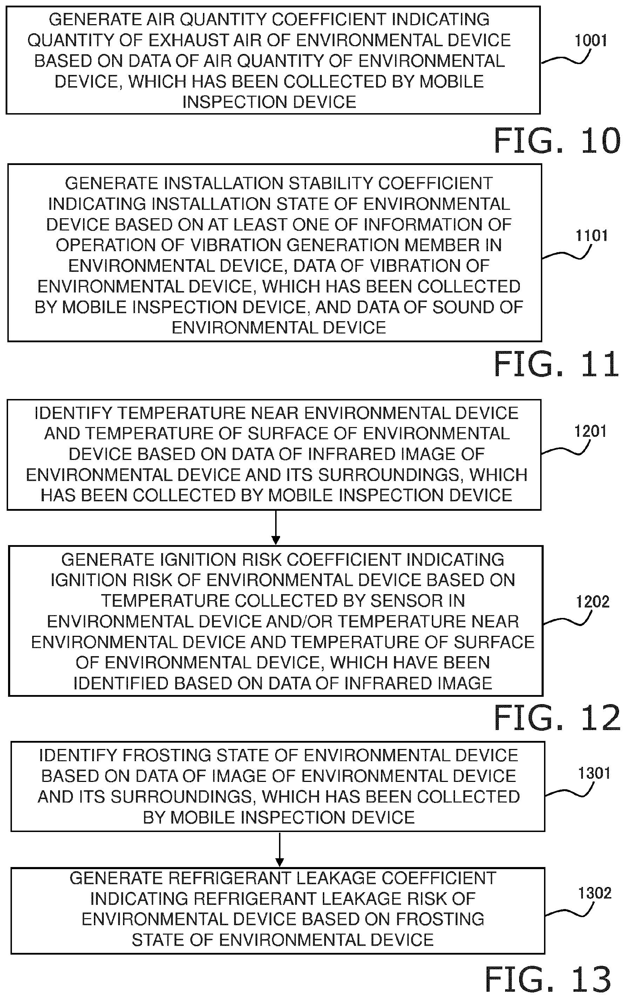

Fig. 10 is a schematic view illustrating a method for generating a quantity of exhaust air, according to Example 1 of the present application. As illustrated in Fig. 10, the method includes

step 1001 for generating an air quantity coefficient indicating a quantity of exhaust air of the environmental device based on data of an air quantity of the environmental device, which has been collected by the mobile inspection device.

In some examples, the data of the air quantity is, for example, data of air quantities at an intake air port and an exhaust air port of the environmental device.

For example, data of an air quantity is acquired from a degree of acceleration of a drone that is present near each of the intake air port and the exhaust air port.

At step 1001, it is possible to input the data of the air quantity of the environmental device into a fifth model having undergone training to output an air quantity coefficient.

In some examples, the fifth model may be a model based on a neural network, and is acquired through training based on various training methods.

In this way, since an air quantity affects performance and deterioration due to aging of the device to some extent, taking an air quantity coefficient into consideration makes it possible to further improve accuracy of estimating a health state parameter of the environmental device.

Next, generation of an installation state of the environmental device in information of changes will now be described.

Fig. 11 is a schematic view illustrating a method for generating an installation state, according to Example 1 of the present application. As illustrated in Fig. 11, the method includes

step 1101 for generating an installation stability coefficient indicating an installation state of the environmental device based on at least one of information of operation of a vibration generation member in the environmental device, data of vibration of the environmental device, which has been collected by the mobile inspection device, and data of sound of the environmental device.

In some examples, when the environmental device operates, the mobile inspection device detects information of operation of the vibration generation member in the environmental device, data of vibration of the environmental device, which has been collected by the mobile inspection device, and data of sound of the environmental device.

In some examples, the drone serving as the mobile inspection device stops at the environmental device, turns off a motor, detects data of vibration of the environmental device with a vibration sensor, and detects data of sound with a directional microphone.

In some examples, it is possible that the vibration generation member in the environmental device includes a motor, a compressor, and the like. For example, operation of the member includes a shift position and a number of rotations, for example, of the member.

At step 1101, it is possible to input at least one of the information of operation of the vibration generation member in the environmental device, the data of vibration of the environmental device, which has been collected by the mobile inspection device, and the data of sound of the environmental device into a sixth model having undergone training to output an installation stability coefficient.

In some examples, the sixth model may be a model based on a neural network, and is acquired through training based on various training methods.

In some examples, when it is possible to acquire information of operation of the vibration generation member in the environmental device, and, for example, when it is possible to couple the environmental device to the network and related information is uploaded to the server on the cloud side, the information of operation of the vibration generation member in the environmental device, the data of vibration of the environmental device, and the data of sound of the environmental device are inputted into the sixth model to acquire an installation stability coefficient.

In some examples, when it is impossible to acquire information of operation of the vibration generation member in the environmental device, and, for example, when it is impossible to couple the environmental device to the network, the data of vibration of the environmental device, which has been collected by the mobile inspection device, and the data of sound of the environmental device are inputted into the sixth model to acquire an installation stability coefficient.

In this way, since installation stability of the device affects performance and deterioration due to aging of the device to some extent, taking an installation stability coefficient into consideration makes it possible to further improve accuracy of estimating a health state parameter of the environmental device.

Next, generation of an ignition risk in information of changes will now be be described.

Fig. 12 is a schematic view illustrating a method for generating an ignition risk, according to Example 1 of the present application. As illustrated in Fig. 12, the method includes:

step 1201 for identifying a temperature near the environmental device and a temperature of the surface of the environmental device based on data of an infrared image of the environmental device and its surroundings, which has been collected by the mobile inspection device; and

step 1202 for generating an ignition risk coefficient indicating an ignition risk of the environmental device based on a temperature collected by a sensor in the environmental device and/or the temperature near the environmental device and the temperature of the surface of the environmental device, which have been identified based on the data of the infrared image.

At step 1202, it is possible to input the collected temperature or identified temperature into a seventh model having undergone training to output an ignition risk coefficient.

In some examples, the seventh model may be a model based on a neural network, and is acquired through training based on various training methods.

In this way, since a temperature affects performance and deterioration due to aging of the device to some extent, taking an ignition risk coefficient into consideration makes it possible to further improve accuracy of estimating a health state parameter of the environmental device.

In addition, in some examples, an ignition risk report may be generated based on an ignition risk coefficient and may be push-delivered to the user. In this way, the user is able to timely know a potential fire risk and to take preventive measures in advance.

Next, generation of a refrigerant leakage risk in information of changes will now be described.

Fig. 13 is a schematic view illustrating a method for generating a refrigerant leakage risk, according to Example 1 of the present invention. As illustrated in Fig. 13, the method includes:

step 1301 for identifying a frosting state of the environmental device based on data of an image of the environmental device and its surroundings, which has been collected by the mobile inspection device; and

step 1302 for generating a refrigerant leakage coefficient indicating a refrigerant leakage risk of the environmental device based on the frosting state of the environmental device.

At step 1302, it is possible to input the frosting state of the environmental device into an eighth model having undergone training to output a refrigerant leakage coefficient.

In some examples, the eighth model may be a model based on a neural network, and is acquired through training based on various training methods.

In this way, since a refrigerant leakage affects performance and deterioration due to aging of the device to some extent, taking a refrigerant leakage coefficient into consideration makes it possible to further improve accuracy of estimating a health state parameter of the environmental device.

The method for generating, at step 102, information of changes, which includes at least one of a ventilation condition for the environmental device, a degree of cleanliness of the environmental device, information of shielding of the environmental device, a drain state, a quantity of exhaust air of the environmental device, an installation state of the environmental device, an ignition risk of the environmental device, and a refrigerant leakage risk, has been specifically described above.

In some examples, it is possible to identify which one piece of information of changes or pieces of information of changes described above is or are to be generated in accordance with an actual situation based on data collectable by the mobile inspection device, based on a degree of influence of information of changes on estimation of a health state of the device, or based on a requirement with respect to estimation accuracy, for example.

In some examples, steps for generating a plurality of pieces of information of changes may be performed previously or later or simultaneously, and an order of generating different pieces of information of changes is not limited in the example of the present application.

At step 103, operation data of the environmental device and information of an initial operation time of the environmental device are acquired.

In some examples, steps 102 and 103 may be executed sequentially or may be executed simultaneously, and an order of executing steps 102 and 103 is not limited in the example of the present application.

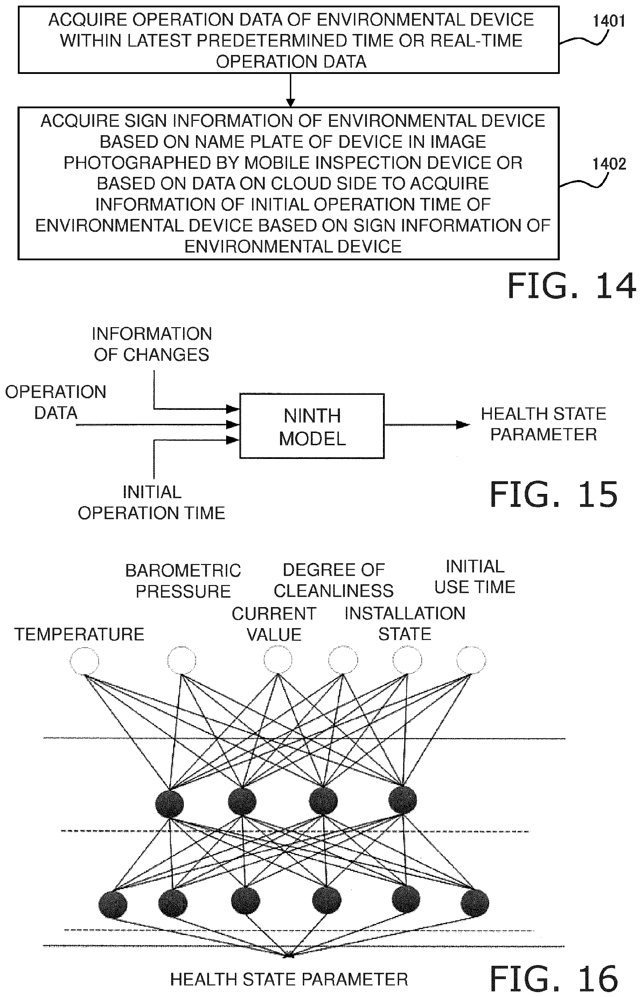

Fig. 14 is a schematic view illustrating a method for achieving step 103, according to Example 1 of the present application. As illustrated in Fig. 14, the method includes:

step 1401 for acquiring operation data of the environmental device within a latest predetermined time or real-time operation data; and

step 1402 for acquiring sign information of the environmental device based on a name plate of the device in an image photographed by the mobile inspection device or based on data on the cloud side to acquire information of an initial operation time of the environmental device based on the sign information of the environmental device.

In some examples, steps 1401 and 1402 may be executed sequentially or simultaneously, and an order of executing steps 1401 and 1402 is not limited in the example of the present application.

In some examples, for example, operation data of the environmental device for last 30 minutes is acquired, or operation data is acquired in a real-time manner.

In some examples, it is possible that operation data of the environmental device includes various operation data. For example, for an outdoor unit of an air conditioner, it is possible that its operation data includes a temperature, barometric pressure, an operation current value, and a voltage value, and the like.

For example, the server on the cloud side acquires operation data of the environmental device.

In some examples, the server on the cloud side identifies an identification (ID) of the environmental device based on a name plate of the device to acquire an initial operation time of the environmental device.

At step 104, a health state parameter of the environmental device is identified based on the information of changes in the site where the environmental device is positioned, the operation data of the environmental device, and the information of the initial operation time of the environmental device.

In some examples, it is possible to use a model having undergone training to acquire a health state parameter, and it is possible to allow the model to undergo training with various training methods.

For example, the information of changes in the site where the environmental device is positioned, the operation data of the environmental device, and the information of the initial operation time of the environmental device are inputted into a ninth model to calculate and output a health state parameter of the environmental device.

In this way, it is possible to acquire an accurate result of estimation.

Fig. 15 is a schematic view illustrating how to use the ninth model, according to Example 1 of the present application. As illustrated in Fig. 15, the information of changes in the site where the environmental device is positioned, the operation data of the environmental device, and the information of the initial operation time of the environmental device are inputted into the ninth model to output a health state parameter of the environmental device.

In some examples, the ninth model is a model based on a fully connected neural network. However, a model based on another network structure may be used in the example of the present application.

Fig. 16 is a schematic view illustrating a network structure of the ninth model, according to Example 1 of the present application. As illustrated in Fig. 16, the operation data such as a temperature, pressure, and a current value of the environmental device, a degree of cleanliness, an installation state, and an initial use time of the environmental device are inputted into the fully connected neural network to output a health state parameter of the environmental device.

In some examples, no model may be allowed to undergo training, and, for example, a health state parameter of the environmental device may be acquired with a table lookup method.

For example, a lookup table method is used to identify a health state parameter of the environmental device based on the information of changes in the site where the environmental device is positioned, the operation data of the environmental device, and the information of the initial operation time of the environmental device. That is, a matching table between these pieces of information and health state parameters is created in advance, and a direct search is performed on the table during a time of use to acquire a corresponding parameter.

In this way, it is possible to easily acquire a health state parameter.

In some examples, a health state parameter of the environmental device may include one or more parameters.

For example, a health state parameter of the environmental device includes at least one of a degree of deterioration due to aging and a depreciation rate of the environmental device.

In some examples, it is possible to express a degree of deterioration due to aging or a depreciation rate in percentage. For example, a degree of deterioration due to aging is 50%, or a depreciation rate is 50%.

In this way, the user is able to intuitively know present value of the environmental device, and to determine a decision such as servicing or replacement in advance.

In some examples, as illustrated in Fig. 1, the method further includes
step 105 for providing a servicing or replacement policy for the environmental device to the user based on the identified health state parameter of the environmental device and a reference value of the health state parameter. Step 105 is an optional step, and is indicated by a dashed-line box in Fig. 1.

In this way, it is possible to provide a reasonable advice to the user to further improve experience of the user.

In some examples, it is possible to acquire a reference value of the health state parameter by performing a calculation based on an initial health state parameter, a use time length, an aging deterioration coefficient, and a cleanliness reduction rate of the environmental device. For example, it is possible to acquire a degree of deterioration due to aging by performing a calculation in accordance with Math. 1 described below.

[Math. 1]

$$p = p_0 + a*log(b*y + d)$$

Where p is degree of deterioration due to aging, $p_0$ is initial degree of deterioration due to aging, a is aging deterioration coefficient, b is cleanliness reduction rate, and d is rapid aging deterioration coefficient.

In some examples, the replacement policy for the environmental device includes a visual relationship between exchange value of the device and a health state parameter.

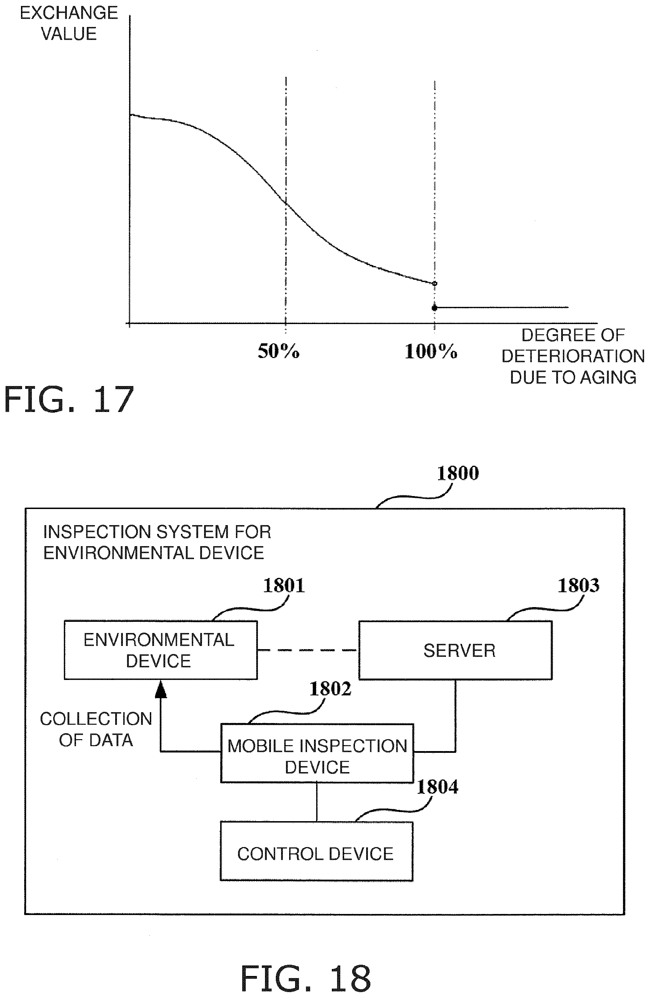

Fig. 17 is a schematic view illustrating a relationship between the exchange value of the device and a degree of deterioration due to aging, according to Example 1 of the present application. As illustrated in Fig. 17, after the degree of deterioration due to aging reaches 50%, the exchange value rapidly lowers, and, after the degree of deterioration due to aging reaches 100%, the exchange value stays at an extremely low level.

In this way, the diagram of the visual relationship allows the user to intuitively know the relationship between the exchange value and the degree of deterioration due to aging, making it possible to take reasonable replacement measures at an early stage to further improve experience of the user.

For example, it is possible to calculate the exchange value in accordance with Math. 2 described below.

[Math. 2]

$$y \text{ exchange value} = \begin{cases} f_1(p), & p \geq 50\% \\ f_2(p), & 50\% < p < 100\% \\ y_0 * b_0, & p \geq 100\% \end{cases}$$

Where p is degree of deterioration due to aging, $y_0$ is original value of the environmental device, and $b_0$ is value when the device is treated to be discarded.

In some examples, as illustrated in Fig. 1, the method further includes step 106 for generating and transmitting an inspection report to the user based on the identified health state parameter of the environmental device. Step 106 is an optional step, and is indicated by a dashed-line box in Fig. 1.

In this way, the user is able to comprehensively know specific information of inspection, further improving experience of the user.

In some examples, when there is a large amount of information of abnormalities or there is occurrence of information of abnormality of a high risk level, information of an alarm is directly push-delivered to the user.

In some examples, as illustrated in Fig. 1, the method further includes step 107 for using the mobile inspection device to perform a cleaning operation on the environmental device to transmit the inspection report in which the cleaning operation is included to the user. Step 107 is an optional step, and is indicated by a dashed-line box in Fig. 1.

For example, the mobile inspection device may be used to blow out foreign substances and dust outside the environmental device.

In this way, it is possible to fully utilize the mobile inspection device to achieve a cleaning function simultaneously during inspection, thereby further improving experience of the user.

In some examples, as illustrated in Fig. 1, the method further includes step 108 for selecting at least one environmental device as a charging station from the environmental device serving as the inspection target and other environmental devices on a moving path for the mobile inspection device to charge the mobile inspection device. Step 108 is an optional step, and is indicated by a dashed-line box in Fig. 1.

In this way, it is possible to fully utilize each of the environmental devices on the moving path as a charging station, making it possible to ensure work continuity and work efficiency of the mobile inspection device.

For example, it is possible to identify a moving path in accordance with a present direction of wind, and to select an optimal environmental device as a charging station.

In some examples, the environmental device charges the mobile inspection device via a battery.

In some examples, a two dimensional code is printed on the environmental device, and the mobile inspection device is charged by scanning the two dimensional code.

In some examples, it is possible to charge the mobile inspection device promptly across two environmental devices. For example, a mobile inspection device may have a plurality of NFCs to make it possible to register a plurality of devices.

In some examples, the mobile inspection device is able to further perform an operation such as a payment for the charging via the control terminal.

Since, as can be seen from the example described above, a mobile inspection device is used to collect data of an environmental device, information of changes in a site of the device is generated based on the data, and a health state parameter of the environmental device is identified based on the information of changes in the site of the device, operation data of the device, and an initial operation time, a user is able to timely know a health state of the environmental device, and thereby able to determine in advance a decision for maintenance, servicing, and replacement, for example, making it possible to fully utilize value of the environmental device to improve use experience of the user.

Furthermore, since, when a health state parameter of the environmental device is to be identified, information of changes, which has been generated from data collected in the site, and information such as operation data and an operation time of the device are combined with each other, various factors affecting the health state of the device are comprehensively taken into consideration, and accuracy of a result of estimation is improved, thereby making it possible to provide accurate health information of the device to the user.

<Example 2>

Example 2 of the present invention provides an inspection system for an environmental device, the inspection system for the environmental device corresponds to the method for inspecting the environmental device, as described in Example 1, for specific implementation of which it is possible to refer to the implementation of the method as described in Example 1, and identical or related contents will not be described in a repeated manner.

Fig. 18 is a schematic view illustrating the inspection system for the environmental device, according to Example 2 of the present invention, and, as illustrated in Fig. 18, an inspection system 1800 for an environmental device includes an environmental device 1801 serving as an inspection target, a mobile inspection device 1802, and a server 1803 on a cloud side.

The mobile inspection device 1802 is allowed to move to a position near the environmental device 1801 and/or to stop at the environmental device 1801, to collect data of a site where the environmental device 1801 is positioned, and to transmit the data to the server 1803.

The server 1803 receives the data transmitted by the mobile inspection device 1802 to generate information of changes in the site where the environmental device 1801 is positioned based on the data, and the server 1803 acquires operation data of the environmental device 1801 and information of an initial operation time of the environmental device 1801 from the environmental device 1801 or the cloud side to further identify a health state parameter of the environmental device 1801 based on the information of changes in the site where the environmental device 1801 is positioned, the operation data of the environmental device 1801, and the information of the initial operation time of the environmental device 1801.

In some examples, the server 1803 further provides a servicing or update policy for the environmental device to the user based on the identified health state parameter of the environmental device and a reference value of the health state parameter.

In some examples, the server 1803 further generates and transmits an inspection report to the user based on the identified health state parameter of the environmental device.

In some examples, it is possible that the environmental device 1801 is to be coupled to a network, and thereby to be communicatively coupled to the server 1803, and, in some other examples, it is impossible that the environmental device 1801 is to be coupled to the network, and thereby to be coupled to the server 1803.

In some examples, as illustrated in Fig. 18, the system further includes

a control device 1804 that controls movement, operation, and charging of the mobile inspection device 1802.

In addition, the control device 1804 is able to further perform processing such as a payment.

In some examples, the control device 1804 selects at least one environmental device as a charging station from the environmental device 1801 serving as the inspection target and other environmental devices on a moving path for the mobile inspection device 1802 to charge the mobile inspection device.

In some examples, the environmental device includes an outdoor unit of an air conditioner.

In some examples, the environmental device further includes a charging device provided on the outdoor unit of the air conditioner.

In some examples, the outdoor unit of the air conditioner is provided with a two dimensional code, and, as the mobile inspection device scans the two dimensional code, the charging device on the outdoor unit of the air conditioner charges the mobile inspection device.

In some examples, the mobile inspection device is a drone or an airship.

In some examples, for achieving the functions of the devices described above, it is possible to refer to the contents of related steps in Example 1, which will not be described in a repeated manner.

Since, as can be seen from the example described above, a mobile inspection device is used to collect data of an environmental device, information of changes in a site of the device is generated based on the data, and a health state parameter of the environmental device is identified based on the information of changes in the site of the device, operation data of the device, and an initial operation time, a user is able to timely know a health state of the environmental device, and thereby able to determine in advance a decision for maintenance, servicing, and replacement, for example, making it possible to fully utilize value of the environmental device to improve use experience of the user.

Furthermore, since, when a health state parameter of the environmental device is to be identified, information of changes, which has been generated from data collected in the site, and information such as operation data and an operation time of the device are combined with each other, various factors affecting the health state of the device are comprehensively taken into consideration, and accuracy of a result of estimation is improved, thereby making it possible to provide accurate health information of the device to the user.

<Example 3>

Example 3 of the present invention provides a mobile inspection device, and, for specific contents of the mobile inspection device, it is possible to refer to the description of the method in Example 1 and the system in Example 2, and identical or related contents will not be described in a repeated manner.

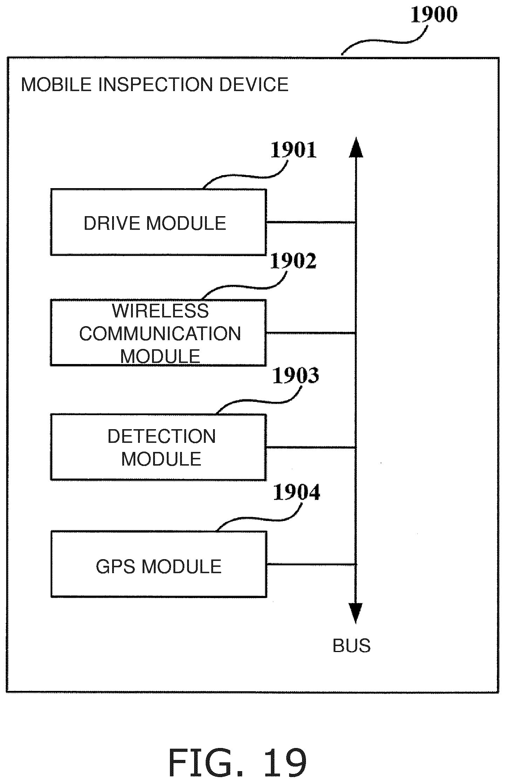

Fig. 19 is a schematic view illustrating a mobile inspection device according to Example 3 of the present invention, and, as illustrated in Fig. 19, the mobile inspection device 1900 includes:

a drive module 1901 that supplies a driving force for allowing the mobile inspection device to move;

a wireless communication module 1902 that performs wireless communication with at least one of a control device for the mobile inspection device, an environmental device, and a server on a cloud side;

a detection module 1903 including at least one of an imaging module, an infrared imaging module, a vibration sensor, a directional sound sensor, a radio detecting and ranging (radar), and an air quantity sensor; and

a global positioning system (GPS) module 1904 that identifies a position of the mobile inspection device.

In some examples, the wireless communication module includes at least one of a Bluetooth (registered trademark) module, a near field communication (NFC) module, and a 2.4G module.

In some examples, the mobile inspection device is a drone or an airship.

Since, as can be seen from the example described above, a mobile inspection device is used to collect data of an environmental device, information of changes in a site of the device is generated based on the data, and a health state parameter of the environmental device is identified based on the information of changes in the site of the device, operation data of the device, and an initial operation time, a user is able to timely know a health state of the environmental device, and thereby able to determine in advance a decision for maintenance, servicing, and replacement, for example, making it possible to fully utilize value of the environmental device to improve use experience of the user.

Furthermore, since, when a health state parameter of the environmental device is to be identified, information of changes, which has been generated from data collected in the site, and information such as operation data and an operation time of the device are combined with each other, various factors affecting the health state of the device are comprehensively taken into consideration, and accuracy of a result of estimation is improved, thereby making it possible to provide accurate health information of the device to the user.

The device and method according to the examples of the present invention described above may be achieved by means of hardware, or may be achieved by means of a combination of hardware and software. The present invention relates to a computer-readable program that makes it possible, when executed by a logic component, to cause the logic component to achieve the device or component described above, or to cause the logic component to achieve the various methods or things described above.

The examples of the present invention further relate to a storage medium for storing the program described above, such as a hard disk, a magnetic disk, an optical disc, a digital versatile disc (DVD), a flash memory, and the like.

It should be noted that limitation in the steps according to the present solution does not limit an order of the steps on the premise of not affecting the implementation of the specific solution, and those written before may be executed first, or may be executed later, or may be executed simultaneously, and, when it is possible to implement the present solution, all of those should be considered to belong to the protection scope of the present application.

Although the present invention has been described with reference to specific embodiments, those skilled in the art will appreciate that these descriptions are only exemplary and are not intended to limit the protection scope of the present invention. A person skilled in the art is able to make various modifications and corrections to the present invention based on the spirit and principle of the present invention, and these modifications and corrections also fall within the scope of the present invention.

**Claims**

1. A method for inspecting an environmental device, comprising:

using a mobile inspection device to collect data of a site where the environmental device is positioned;

generating information of changes in the site where the environmental device is positioned based on the data collected by the mobile inspection device;

acquiring operation data of the environmental device and information of an initial operation time of the environmental device; and

identifying a health state parameter of the environmental device based on the information of changes in the site where the environmental device is positioned, the operation data of the environmental device, and the information of the initial operation time of the environmental device.

2. The method according to claim 1, wherein the data collected by the mobile inspection device includes at least one of data of an image of the environmental device and its surroundings, radar detection data with respect to the environmental device and its surroundings, data of vibration of the environmental device, data of sound of the environmental device, data of an air quantity of the environmental device, and data of an infrared image of the environmental device and its surroundings.

3. The method according to claim 1, wherein using the mobile inspection device to collect data of the site where the environmental device is positioned includes:

   allowing the mobile inspection device to move to a position near the environmental device and/or to stop at the environmental device; and
   allowing the mobile inspection device to collect the data of the site where the environmental device is positioned.

4. The method according to claim 3, wherein allowing the mobile inspection device to move to a position near the environmental device and/or to stop at the environmental device includes:

   allowing the mobile inspection device to acquire information of a position of the environmental device and/or information of an address of a user from a cloud side or a database; and
   allowing the mobile inspection device to move to a position near the environmental device and/or to stop at the environmental device based on the information of the position and/or the information of the address.

5. The method according to claim 4, wherein allowing the mobile inspection device to move to a position near the environmental device and/or to stop at the environmental device includes:

   allowing the mobile inspection device to perform a search within a certain region based on the information of the position and/or the information of the address to identify a position of the environmental device; and
   allowing the mobile inspection device to move to a position near the environmental device and/or to stop at the environmental device based on the position of the environmental device, the position being identified through the searching.

6. The method according to claim 5, further comprising allowing the mobile inspection device to transmit the position of the environmental device, the position being identified through the searching, to the cloud side or the database to update the position of the environmental device.

7. The method according to claim 3, further comprising allowing the environmental device to wireless-charge the mobile inspection device.

8. The method according to claim 1 or 2, wherein the information of changes includes at least one of a ventilation condition for the environmental device, a degree of cleanliness of the environmental device, information of shielding of the environmental device, a drain state, a quantity of exhaust air of the environmental device, an installation state of the environmental device, an ignition risk of the environmental device, and a refrigerant leakage risk.

9. The method according to claim 8, wherein generating information of changes in the site where the environmental device is positioned based on the data collected by the mobile inspection device includes:

   detecting an obstacle outside the environmental device and a position of the obstacle based on data of an image of the environmental device and its surroundings, the data of the image being collected by the mobile inspection device, and radar detection data with respect to the environmental device and its surroundings; and
   generating an obstacle coefficient indicating a ventilation condition for the environmental device based on a result of the detection of the obstacle outside the environmental device and the position of the obstacle.

10. The method according to claim 9, wherein the obstacle includes a branch, a leaf, a foreign object, and another environmental device.

11. The method according to claim 8, wherein generating information of changes in the site where the environmental device is positioned based on the data collected by the mobile inspection device includes:

detecting dust and rust outside the environmental device based on data of an image of the environmental device and its surroundings, the data of the image being collected by the mobile inspection device; and
generating a dirt coefficient and a rust coefficient indicating a degree of cleanliness of the environmental device based on a result of the detection of the dust and rust outside the environmental device.

12. The method according to claim 8, wherein generating information of changes in the site where the environmental device is positioned based on the data collected by the mobile inspection device includes:

acquiring related information and light illumination information of a building where the environmental device is positioned and surrounding buildings based on data of an image of the environmental device and its surroundings, the data of the image being collected by the mobile inspection device, and/or data on a cloud side or data in a database; and
generating a shielding coefficient indicating information of shielding of the environmental device based on the related information and the light illumination information of the building where the environmental device is positioned and the surrounding buildings.

13. The method according to claim 8, wherein generating information of changes in the site where the environmental device is positioned based on the data collected by the mobile inspection device includes:

acquiring data of an image of a condensation water drain outlet of the environmental device and/or a drain outlet of a building based on data of an image of the environmental device and its surroundings, the data of the image being collected by the mobile inspection device; and
generating a drain coefficient indicating a drain state of the environmental device based on the data of the image of the condensation water drain outlet of the environmental device and/or the drain outlet of the building.

14. The method according to claim 8, further comprising generating an air quantity coefficient indicating a quantity of exhaust air of the environmental device based on data of an air quantity of the environmental device, the data of the air quantity being collected by the mobile inspection device.

15. The method according to claim 8, wherein generating information of changes in the site where the environmental device is positioned based on the data collected by the mobile inspection device includes
generating an installation stability coefficient indicating an installation state of the environmental device based on at least one of information of operation of a vibration generation member in the environmental device, data of vibration of the environmental device, the data of the vibration being collected by the mobile inspection device, and data of sound of the environmental device.

16. The method according to claim 8, wherein generating information of changes in the site where the environmental device is positioned based on the data collected by the mobile inspection device includes:

identifying a temperature near the environmental device and a temperature of a surface of the environmental device based on data of an infrared image of the environmental device and its surroundings, the data of the infrared image being collected by the mobile inspection device; and
generating an ignition risk coefficient indicating an ignition risk of the environmental device based on a temperature collected by a sensor in the environmental device and/or the temperature near the environmental device and the temperature of the surface of the environmental device, the temperatures being identified based on the data of the infrared image.

17. The method according to claim 8, wherein generating information of changes in the site where the environmental device is positioned based on the data collected by the mobile inspection device includes:

identifying a frosting state of the environmental device based on data of an image of the environmental device and its surroundings, the data of the image being collected by the mobile inspection device; and
generating a refrigerant leakage coefficient indicating a refrigerant leakage risk of the environmental device based on the frosting state of the environmental device.

18. The method according to any one of claims 1 to 17, wherein generating information of changes in the site where the environmental device is positioned based on the data collected by the mobile inspection device includes
inputting the data collected by the mobile inspection device into a model to output information of changes in the site where the environmental device is positioned.

19. The method according to claim 18, wherein inputting the data collected by the mobile inspection device into the model to output information of changes in the site where the environmental device is positioned includes inputting pieces of data, the pieces of data being different in type from each other, the pieces of data being collected by the mobile inspection device, into corresponding models that are different in type from each other, respectively, to output corresponding pieces of information of changes, respectively.

20. The method according to claim 1, further comprising allowing the mobile inspection device to transmit the collected data to a server on a cloud side to allow the server to generate information of changes in the site where the environmental device is positioned based on the collected data.

21. The method according to claim 1, wherein acquiring operation data of the environmental device and information of an initial operation time of the environmental device includes:

   acquiring operation data of the environmental device within a latest predetermined time or real-time operation data; and
   acquiring sign information of the environmental device based on a name plate of the device in an image photographed by the mobile inspection device or based on data on a cloud side to acquire information of an initial operation time of the environmental device based on the sign information of the environmental device.

22. The method according to claim 1, wherein identifying a health state parameter of the environmental device based on the information of changes in the site where the environmental device is positioned, the operation data of the environmental device, and the information of the initial operation time of the environmental device includes inputting the information of changes in the site where the environmental device is positioned, the operation data of the environmental device, and the information of the initial operation time of the environmental device into a model to calculate and output a health state parameter of the environmental device.

23. The method according to claim 22, wherein the model is a model based on a fully connected neural network.

24. The method according to claim 1, wherein identifying a health state parameter of the environmental device based on the information of changes in the site where the environmental device is positioned, the operation data of the environmental device, and the information of the initial operation time of the environmental device includes using a table lookup method to identify a health state parameter of the environmental device based on the information of changes in the site where the environmental device is positioned, the operation data of the environmental device, and the information of the initial operation time of the environmental device.

25. The method according to claim 1, wherein a health state parameter of the environmental device includes at least one of a degree of deterioration due to aging and a depreciation rate of the environmental device.

26. The method according to claim 1, further comprising providing a servicing or replacement policy for the environmental device to a user based on the identified health state parameter of the environmental device and a reference value of the health state parameter.

27. The method according to claim 26, wherein a reference value of the health state parameter is acquired by performing a calculation based on an initial health state parameter, a use time length, an aging deterioration coefficient, and a cleanliness reduction rate of the environmental device.

28. The method according to claim 26 or 27, wherein the replacement policy for the environmental device includes a visual relationship between exchange value of the device and a health state parameter.

29. The method according to claim 1 or 26, further comprising generating and transmitting an inspection report to the user based on the identified health state parameter of the environmental device.

30. The method according to claim 29, further comprising using the mobile inspection device to perform a cleaning operation on the environmental device to transmit the inspection report in which the cleaning operation is included to the user.

31. The method according to claim 1, further comprising selecting at least one environmental device as a charging station from the environmental device serving as an inspection target and other environmental devices on a moving path for the mobile inspection device to charge the mobile inspection device.

32. The method according to claim 1, wherein the environmental device includes an outdoor unit of an air conditioner.

33. The method according to claim 1, wherein the mobile inspection device is a drone or an airship.

34. An inspection system for an environmental device, comprising:

   the environmental device serving as an inspection target;
   a mobile inspection device; and
   a server on a cloud side,
   wherein
   the mobile inspection device is allowed to move to a position near the environmental device and/or to stop at the environmental device, to collect data of a site where the environmental device is positioned, and to transmit the data to the server, and
   the server receives the data transmitted by the mobile inspection device to generate information of changes in the site where the environmental device is positioned based on the data, and the server acquires operation data of the environmental device and information of an initial operation time of the environmental device from the environmental device or the cloud side to further identify a health state parameter of the environmental device based on the information of changes in the site where the environmental device is positioned, the operation data of the environmental device, and the information of the initial operation time of the environmental device.

35. The system according to claim 34, wherein the server further provides a servicing or update policy for the environmental device to a user based on the identified health state parameter of the environmental device and a reference value of the health state parameter.

36. The system according to claim 34 or 35, wherein the server further generates and transmits an inspection report to the user based on the identified health state parameter of the environmental device.

37. The system according to claim 34, further comprising a control device that controls movement, operation, and charging of the mobile inspection device.

38. The system according to claim 37, wherein the control device selects at least one environmental device as a charging station from the environmental device serving as the inspection target and other environmental devices on a moving path for the mobile inspection device to charge the mobile inspection device.

39. The system according to claim 34, wherein the environmental device includes an outdoor unit of an air conditioner.

40. The system according to claim 39, wherein the environmental device further includes a charging device provided on the outdoor unit of the air conditioner.

41. The system according to claim 40, wherein the outdoor unit of the air conditioner is provided with a two dimensional code, and, as the mobile inspection device scans the two dimensional code, the charging device on the outdoor unit of the air conditioner charges the mobile inspection device.

42. The system according to claim 34, wherein the mobile inspection device is a drone or an airship.

43. A mobile inspection device comprising:

   a drive module that supplies a driving force for allowing the mobile inspection device to move;
   a wireless communication module that performs wireless communication with at least one of a control device for the mobile inspection device, an environmental device, and a server on a cloud side;
   a detection module including at least one of an imaging module, an infrared imaging module, a vibration sensor, a directional sound sensor, a radio detecting and ranging (radar), and an air quantity sensor; and
   a global positioning system (GPS) module that identifies a position of the mobile inspection device.

44. The mobile inspection device according to claim 43, wherein the wireless communication module includes at least one of a Bluetooth (registered trademark) module, a near field communication (NFC) module, and 2.4G module.

45. The mobile inspection device according to claim 43 or 44, wherein the mobile inspection device is a drone or an airship.

```
┌─────────────────────────────────────────────────┐
│           USE MOBILE INSPECTION DEVICE TO        │      101
│            COLLECT DATA OF SITE WHERE            │
│        ENVIRONMENTAL DEVICE IS POSITIONED        │
└─────────────────────────────────────────────────┘
                        │
                        ▼
┌─────────────────────────────────────────────────┐
│  GENERATE INFORMATION OF CHANGES IN SITE WHERE   │      102
│    ENVIRONMENTAL DEVICE IS POSITIONED BASED ON   │
│   DATA COLLECTED BY MOBILE INSPECTION DEVICE     │
└─────────────────────────────────────────────────┘
                        │
                        ▼
┌─────────────────────────────────────────────────┐
│  ACQUIRE OPERATION DATA OF ENVIRONMENTAL DEVICE  │      103
│    AND INFORMATION OF INITIAL OPERATION TIME OF  │
│             ENVIRONMENTAL DEVICE                 │
└─────────────────────────────────────────────────┘
                        │
                        ▼
┌─────────────────────────────────────────────────┐
│ IDENTIFY HEALTH STATE PARAMETER OF ENVIRONMENTAL │
│   DEVICE BASED ON INFORMATION OF CHANGES IN SITE │
│      WHERE ENVIRONMENTAL DEVICE IS POSITIONED,   │      104
│    OPERATION DATA OF ENVIRONMENTAL DEVICE, AND   │
│      INFORMATION OF INITIAL OPERATION TIME OF    │
│             ENVIRONMENTAL DEVICE                 │
└─────────────────────────────────────────────────┘
                        │
                        ▼
┌ ─ ─ ─ ─ ─ ─ ─ ─ ─ ─ ─ ─ ─ ─ ─ ─ ─ ─ ─ ─ ─ ─ ─ ─ ┐
   PROVIDE SERVICING OR REPLACEMENT POLICY FOR
│     ENVIRONMENTAL DEVICE TO USER BASED ON        │    105
        IDENTIFIED HEALTH STATE PARAMETER OF
│    ENVIRONMENTAL DEVICE AND REFERENCE VALUE OF   │
             HEALTH STATE PARAMETER
└ ─ ─ ─ ─ ─ ─ ─ ─ ─ ─ ─ ─ ─ ─ ─ ─ ─ ─ ─ ─ ─ ─ ─ ─ ┘
                        │
                        ▼
┌ ─ ─ ─ ─ ─ ─ ─ ─ ─ ─ ─ ─ ─ ─ ─ ─ ─ ─ ─ ─ ─ ─ ─ ─ ┐
     GENERATE AND TRANSMIT INSPECTION REPORT TO
│  USER BASED ON IDENTIFIED HEALTH STATE PARAMETER │    106
            OF ENVIRONMENTAL DEVICE
└ ─ ─ ─ ─ ─ ─ ─ ─ ─ ─ ─ ─ ─ ─ ─ ─ ─ ─ ─ ─ ─ ─ ─ ─ ┘
                        │
                        ▼
┌ ─ ─ ─ ─ ─ ─ ─ ─ ─ ─ ─ ─ ─ ─ ─ ─ ─ ─ ─ ─ ─ ─ ─ ─ ┐
     USE MOBILE INSPECTION DEVICE TO PERFORM
│  CLEANING OPERATION ON ENVIRONMENTAL DEVICE,     │    107
       AND TRANSMIT INSPECTION REPORT IN WHICH
│    CLEANING OPERATION IS INCLUDED TO USER        │
└ ─ ─ ─ ─ ─ ─ ─ ─ ─ ─ ─ ─ ─ ─ ─ ─ ─ ─ ─ ─ ─ ─ ─ ─ ┘
                        │
                        ▼
┌ ─ ─ ─ ─ ─ ─ ─ ─ ─ ─ ─ ─ ─ ─ ─ ─ ─ ─ ─ ─ ─ ─ ─ ─ ┐
    SELECT AT LEAST ONE ENVIRONMENTAL DEVICE AS
│   CHARGING STATION FROM ENVIRONMENTAL DEVICE     │
       SERVING AS INSPECTION TARGET AND OTHER         108
│  ENVIRONMENTAL DEVICES ON MOVING PATH FOR        │
       MOBILE INSPECTION DEVICE TO CHARGE MOBILE
│             INSPECTION DEVICE                    │
└ ─ ─ ─ ─ ─ ─ ─ ─ ─ ─ ─ ─ ─ ─ ─ ─ ─ ─ ─ ─ ─ ─ ─ ─ ┘
```

# FIG. 1

BUILDING B       BUILDING A       BUILDING C

# FIG. 2

```
         301
ALLOW MOBILE INSPECTION DEVICE TO
MOVE TO POSITION NEAR ENVIRONMENTAL
     DEVICE AND/OR TO STOP AT
       ENVIRONMENTAL DEVICE
                            302
ALLOW MOBILE INSPECTION DEVICE TO
    COLLECT DATA OF SITE WHERE
ENVIRONMENTAL DEVICE IS POSITIONED
                            303
ALLOW ENVIRONMENTAL DEVICE TO
  WIRELESS-CHARGE MOBILE
     INSPECTION DEVICE
```

# FIG. 3

ALLOW MOBILE INSPECTION DEVICE TO ACQUIRE INFORMATION OF POSITION OF ENVIRONMENTAL DEVICE AND/OR INFORMATION OF ADDRESS OF USER FROM CLOUD SIDE OR DATABASE — 401

ALLOW MOBILE INSPECTION DEVICE TO MOVE TO POSITION NEAR ENVIRONMENTAL DEVICE AND/OR TO STOP AT ENVIRONMENTAL DEVICE BASED ON INFORMATION OF POSITION AND/OR INFORMATION OF ADDRESS — 402

FIG. 4

ALLOW MOBILE INSPECTION DEVICE TO PERFORM SEARCH WITHIN CERTAIN REGION BASED ON INFORMATION OF POSITION AND/OR INFORMATION OF ADDRESS TO IDENTIFY POSITION OF ENVIRONMENTAL DEVICE — 501

ALLOW MOBILE INSPECTION DEVICE TO MOVE TO POSITION NEAR ENVIRONMENTAL DEVICE AND/OR TO STOP AT ENVIRONMENTAL DEVICE BASED ON POSITION OF ENVIRONMENTAL DEVICE, WHICH HAS BEEN IDENTIFIED THROUGH SEARCHING — 502

ALLOW MOBILE INSPECTION DEVICE TO TRANSMIT POSITION OF ENVIRONMENTAL DEVICE, WHICH HAS BEEN IDENTIFIED THROUGH SEARCHING, TO CLOUD SIDE OR DATABASE TO UPDATE POSITION OF ENVIRONMENTAL DEVICE — 503

FIG. 5

DETECT OBSTACLE OUTSIDE ENVIRONMENTAL DEVICE AND POSITION OF OBSTACLE BASED ON DATA OF IMAGE OF ENVIRONMENTAL DEVICE AND ITS SURROUNDINGS, WHICH HAS BEEN COLLECTED BY MOBILE INSPECTION DEVICE, AND RADAR DETECTION DATA WITH RESPECT TO ENVIRONMENTAL DEVICE AND ITS SURROUNDINGS — 601

GENERATE OBSTACLE COEFFICIENT INDICATING VENTILATION CONDITION FOR ENVIRONMENTAL DEVICE BASED ON RESULT OF DETECTION OF OBSTACLE OUTSIDE ENVIRONMENTAL DEVICE AND POSITION OF OBSTACLE — 602

FIG. 6

DETECT DUST AND RUST OUTSIDE ENVIRONMENTAL DEVICE BASED ON DATA OF IMAGE OF ENVIRONMENTAL DEVICE AND ITS SURROUNDINGS, WHICH HAS BEEN COLLECTED BY MOBILE INSPECTION DEVICE — 701

GENERATE DIRT COEFFICIENT AND RUST COEFFICIENT INDICATING DEGREE OF CLEANLINESS OF ENVIRONMENTAL DEVICE BASED ON RESULT OF DETECTION OF DUST AND RUST OUTSIDE ENVIRONMENTAL DEVICE — 702

# FIG. 7

ACQUIRE RELATED INFORMATION AND LIGHT ILLUMINATION INFORMATION OF BUILDING WHERE ENVIRONMENTAL DEVICE IS POSITIONED AND SURROUNDING BUILDINGS BASED ON DATA OF IMAGE OF ENVIRONMENTAL DEVICE AND ITS SURROUNDINGS, WHICH HAS BEEN COLLECTED BY MOBILE INSPECTION DEVICE, AND/OR DATA ON CLOUD SIDE OR DATA IN DATABASE — 801

GENERATE SHIELDING COEFFICIENT INDICATING INFORMATION OF SHIELDING OF ENVIRONMENTAL DEVICE BASED ON RELATED INFORMATION AND LIGHT ILLUMINATION INFORMATION OF BUILDING WHERE ENVIRONMENTAL DEVICE IS POSITIONED AND SURROUNDING BUILDINGS — 802

# FIG. 8

ACQUIRE DATA OF IMAGE OF CONDENSATION WATER DRAIN OUTLET OF ENVIRONMENTAL DEVICE AND/OR DRAIN OUTLET OF BUILDING BASED ON DATA OF IMAGE OF ENVIRONMENTAL DEVICE AND ITS SURROUNDINGS, WHICH HAS BEEN COLLECTED BY MOBILE INSPECTION DEVICE — 901

GENERATE DRAIN COEFFICIENT INDICATING DRAIN STATE OF ENVIRONMENTAL DEVICE BASED ON DATA OF IMAGE OF CONDENSATION WATER DRAIN OUTLET OF ENVIRONMENTAL DEVICE AND/OR DRAIN OUTLET OF BUILDING — 902

# FIG. 9

GENERATE AIR QUANTITY COEFFICIENT INDICATING QUANTITY OF EXHAUST AIR OF ENVIRONMENTAL DEVICE BASED ON DATA OF AIR QUANTITY OF ENVIRONMENTAL DEVICE, WHICH HAS BEEN COLLECTED BY MOBILE INSPECTION DEVICE — 1001

## FIG. 10

GENERATE INSTALLATION STABILITY COEFFICIENT INDICATING INSTALLATION STATE OF ENVIRONMENTAL DEVICE BASED ON AT LEAST ONE OF INFORMATION OF OPERATION OF VIBRATION GENERATION MEMBER IN ENVIRONMENTAL DEVICE, DATA OF VIBRATION OF ENVIRONMENTAL DEVICE, WHICH HAS BEEN COLLECTED BY MOBILE INSPECTION DEVICE, AND DATA OF SOUND OF ENVIRONMENTAL DEVICE — 1101

## FIG. 11

IDENTIFY TEMPERATURE NEAR ENVIRONMENTAL DEVICE AND TEMPERATURE OF SURFACE OF ENVIRONMENTAL DEVICE BASED ON DATA OF INFRARED IMAGE OF ENVIRONMENTAL DEVICE AND ITS SURROUNDINGS, WHICH HAS BEEN COLLECTED BY MOBILE INSPECTION DEVICE — 1201

GENERATE IGNITION RISK COEFFICIENT INDICATING IGNITION RISK OF ENVIRONMENTAL DEVICE BASED ON TEMPERATURE COLLECTED BY SENSOR IN ENVIRONMENTAL DEVICE AND/OR TEMPERATURE NEAR ENVIRONMENTAL DEVICE AND TEMPERATURE OF SURFACE OF ENVIRONMENTAL DEVICE, WHICH HAVE BEEN IDENTIFIED BASED ON DATA OF INFRARED IMAGE — 1202

## FIG. 12

IDENTIFY FROSTING STATE OF ENVIRONMENTAL DEVICE BASED ON DATA OF IMAGE OF ENVIRONMENTAL DEVICE AND ITS SURROUNDINGS, WHICH HAS BEEN COLLECTED BY MOBILE INSPECTION DEVICE — 1301

GENERATE REFRIGERANT LEAKAGE COEFFICIENT INDICATING REFRIGERANT LEAKAGE RISK OF ENVIRONMENTAL DEVICE BASED ON FROSTING STATE OF ENVIRONMENTAL DEVICE — 1302

## FIG. 13

ACQUIRE OPERATION DATA OF ENVIRONMENTAL DEVICE WITHIN LATEST PREDETERMINED TIME OR REAL-TIME OPERATION DATA — 1401

ACQUIRE SIGN INFORMATION OF ENVIRONMENTAL DEVICE BASED ON NAME PLATE OF DEVICE IN IMAGE PHOTOGRAPHED BY MOBILE INSPECTION DEVICE OR BASED ON DATA ON CLOUD SIDE TO ACQUIRE INFORMATION OF INITIAL OPERATION TIME OF ENVIRONMENTAL DEVICE BASED ON SIGN INFORMATION OF ENVIRONMENTAL DEVICE — 1402

FIG. 14

INFORMATION OF CHANGES

OPERATION DATA

NINTH MODEL

HEALTH STATE PARAMETER

INITIAL OPERATION TIME

FIG. 15

BAROMETRIC PRESSURE    DEGREE OF CLEANLINESS    INITIAL USE TIME

CURRENT VALUE    INSTALLATION STATE

TEMPERATURE

HEALTH STATE PARAMETER

FIG. 16

EXCHANGE
VALUE

50%        100%

DEGREE OF
DETERIORATION
DUE TO AGING

# FIG. 17

1800

INSPECTION SYSTEM FOR
ENVIRONMENTAL DEVICE

1801                                    1803

| ENVIRONMENTAL DEVICE | - - - - - | SERVER |

1802

COLLECTION
OF DATA

| MOBILE INSPECTION DEVICE |

1804

| CONTROL DEVICE |

# FIG. 18

1900

MOBILE INSPECTION DEVICE

1901

DRIVE MODULE

1902

WIRELESS
COMMUNICATION
MODULE

1903

DETECTION
MODULE

1904

GPS MODULE

BUS

FIG. 19

## INTERNATIONAL SEARCH REPORT

| International application No. |
|---|
| **PCT/JP2023/026363** |

| **A.** | **CLASSIFICATION OF SUBJECT MATTER** |
|---|---|

*F24F 11/38*(2018.01)i; *F24F 11/54*(2018.01)i; *F24F 11/58*(2018.01)i
FI:   F24F11/38; F24F11/54; F24F11/58

According to International Patent Classification (IPC) or to both national classification and IPC

| **B.** | **FIELDS SEARCHED** |
|---|---|

Minimum documentation searched (classification system followed by classification symbols)

F24F11/38; F24F11/54; F24F11/58

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2020-193743 A (MITSUBISHI ELECTRIC CORP) 03 December 2020 (2020-12-03) paragraphs [0010]-[0107], fig. 1-24 | 1-5, 20, 24-30, 32-36, 39, 42-45 |
| Y | | 6-8, 11, 14, 18-19, 21-23, 31, 37-38, 40-41 |
| A | | 9-10, 12-13, 15-17 |
| Y | WO 2021/214874 A1 (MITSUBISHI ELECTRIC CORP) 28 October 2021 (2021-10-28) paragraphs [0010]-[0090], fig. 1-18 | 6, 18-19 |
| A | | 7-17, 20-28, 29-45 |
| Y | JP 2017-154577 A (TAKUMA KK) 07 September 2017 (2017-09-07) paragraph [0035], fig. 1 | 7, 18-19 |
| A | | 8-17, 20-28, 29-45 |
| Y | JP 2004-132683 A (DAIKIN IND LTD) 30 April 2004 (2004-04-30) paragraphs [0037]-[0135], fig. 1-7 | 8, 11, 14, 18-19 |
| A | | 9-10, 12-13, 15-17, 20-45 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2023/026363** |

### C. DOCUMENTS CONSIDERED TO BE RELEVANT

| Category* | Citation of document, with indication, where appropriate, of the relevant passages | Relevant to claim No. |
|---|---|---|
| Y | JP 2018-194949 A (DAIKIN IND LTD) 06 December 2018 (2018-12-06) paragraphs [0045]-[0078], fig. 1-8 | 11, 18-19 |
| A | | 12-17, 20-45 |
| Y | JP 2021-089116 A (TOKYO ELECTRIC POWER CO HOLDINGS INC) 10 June 2021 (2021-06-10) paragraphs [0009]-[0091], fig. 1-17 | 18-19, 22-23 |
| A | | 20-21, 24-45 |
| Y | WO 2016/162952 A1 (MITSUBISHI ELECTRIC CORP) 13 October 2016 (2016-10-13) paragraphs [0022]-[0058] | 21 |
| A | | 22-45 |
| Y | JP 2019-006238 A (TOSHIBA CARRIER CORP) 17 January 2019 (2019-01-17) paragraphs [0007]-[0091] | 31, 37-38, 40-41 |
| A | | 32-36, 39, 42-45 |

Form PCT/ISA/210 (second sheet) (January 2015)

## INTERNATIONAL SEARCH REPORT
### Information on patent family members

International application No.

**PCT/JP2023/026363**

| Patent document cited in search report | | | Publication date (day/month/year) | Patent family member(s) | Publication date (day/month/year) |
|---|---|---|---|---|---|
| JP | 2020-193743 | A | 03 December 2020 | (Family: none) | |
| WO | 2021/214874 | A1 | 28 October 2021 | (Family: none) | |
| JP | 2017-154577 | A | 07 September 2017 | (Family: none) | |
| JP | 2004-132683 | A | 30 April 2004 | (Family: none) | |
| JP | 2018-194949 | A | 06 December 2018 | US 2020/0058001 A1 paragraphs [0071]-[0094], fig. 1-8 <br> EP 3627405 A1 | |
| JP | 2021-089116 | A | 10 June 2021 | (Family: none) | |
| WO | 2016/162952 | A1 | 13 October 2016 | US 2018/0058712 A1 paragraphs [0019]-[0066] <br> EP 3104091 A1 | |
| JP | 2019-006238 | A | 17 January 2019 | (Family: none) | |

Form PCT/ISA/210 (patent family annex) (January 2015)